# EUROPEAN PATENT SPECIFICATION

(11) **EP 4 445 185 B1**
(45) Date of publication and mention of the grant of the patent: **09.09.2026**
(21) Application number: 21840663.5
(22) Date of filing: 07.12.2021
(51) Int. Cl.: G01V 3/34, G01V 3/38, G01N 24/08

(54) **METHOD AND SYSTEM FOR FORMATION EVALUATION**
VERFAHREN UND SYSTEM ZUR FORMATIONSBEURTEILUNG
PROCÉDÉ ET SYSTÈME D'ÉVALUATION DE FORMATION

(43) Date of publication of application: 16.10.2024
(73) Proprietor: CGG Services SAS, 91300 Massy (FR)
(72) Inventor: CALVERT, Stefan, 91300 Massy (FR)
(74) Representative: Ipsilon
(86) International application number: PCT/IB2021/000850
(87) International publication number: WO 2023/105258

(56) References cited:
- US-B1- 6 470 274
- PEETERS MAX ET AL: "Review of Existing Shaly-Sand Models and Introduction of a New Method Based on Dry-Clay Parameters Manuscript", 1 January 2014 (2014-01-01), XP055935313, Retrieved from the Internet <URL:https://www.aptiantechnical.com/sites/default/files/key-references/PEETERS_M_HOLMES_A_Review_of_Existing_Shaly_Sand_Models_and_Introduction_of_a_New_Method_Based_on_Dry_Clay_Parameters.pdf> [retrieved on 20220624]
- OPUWARI MIMONITU: "PETROPHYSICAL EVALUATION OF THE ALBIAN AGE GAS BEARING SANDSTONE RESERVOIRS OF THE O-M FIELD, ORANGE BASIN, SOUTH AFRICA", PETROPHYSICAL EVALUATION OF THE ALBIAN AGE GAS BEARING SANDSTONE RESERVOIRS OF THE O-M FIELD, ORANGE BASIN, SOUTH AFRICA, UNIVERSITY OF THE WESTERN CAPE, BELLVILLE, SOUTH AFRICA, 1 May 2010 (2010-05-01), pages I - XIV, 13, XP002699533

## Description

### TECHNICAL FIELD

Embodiments of the subject matter disclosed herein generally relate to evaluation of subsurface formations to assess their composition; more specifically, to accurately quantify total and effective porosities along with their associated water saturation, using conductive rock contents from downhole log data of rock formations without conductivity calibration based on core rock data.

### DISCUSSION OF THE BACKGROUND

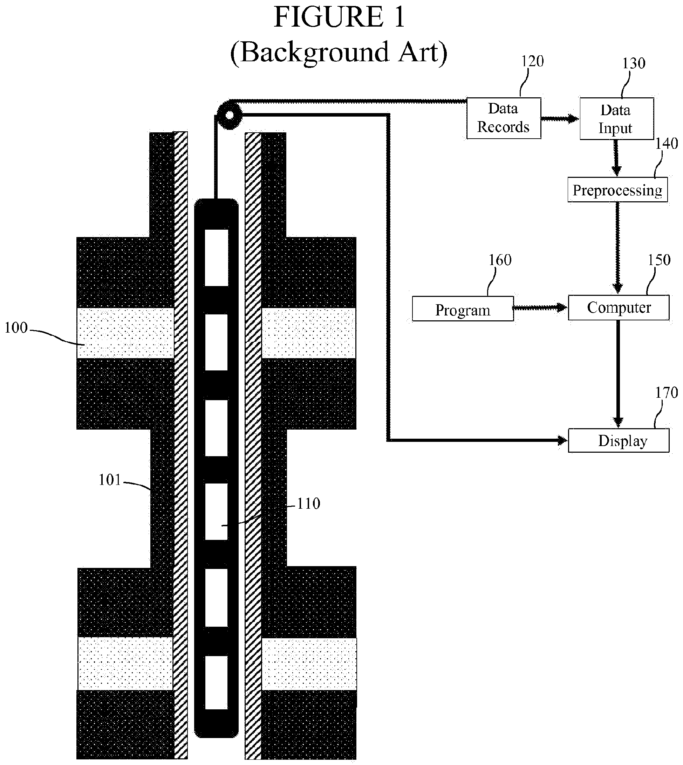

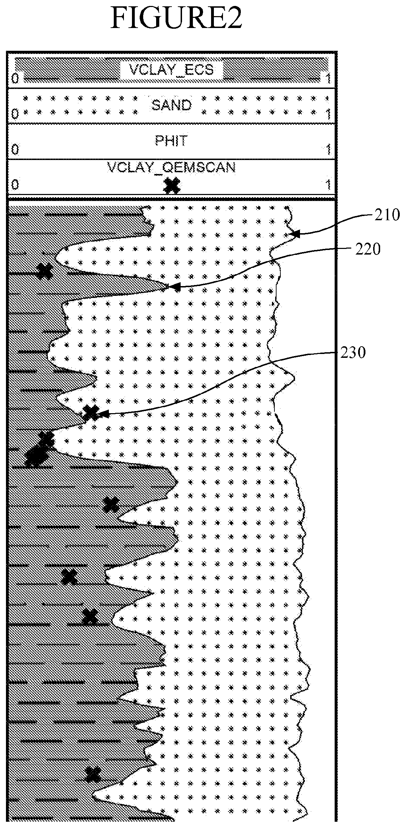

Subsurface formations' structure is customarily evaluated for intervals of interest for commercial exploitation, using downhole measurement logs obtained by wireline or logging while drilling wellbores in these formations. Figure 1 schematically illustrates a logging tool 110 that is lowered in a well 101 drilled in formation 100. The logging tool is typically a string of instruments that may measure the natural gamma ray, electrical, acoustic, stimulated radioactive responses, electromagnetic, nuclear magnetic resonance, density, pressure and/or other properties of the probed formation interval. Measured values (known as "logs") are transmitted and recorded. Data records 120 may be further processed onsite or later offsite. At least part of this recorded data 130 is input to preprocessed (e.g., filtered, correlated with depth, etc.) at 140 and then processed by a computer 150 using dedicated software 160. The resulting formation-related values, such as volumes of constituent materials, porosity and water saturation, can be estimated from these log measurements. The log data and the processing results may be visualized as values (horizontally) versus depth (increasing downward) on a display 170. For example, Figure 2 illustrates such a displayed image in which clay volume measurements 230 obtained from Quantitative Scanning Electron-microscopy (QEMScan) of cores associated with specific depths are represented besides the clay volume 210 and sand 220 content evaluated from logging tool measurements (here, the logging tool is an Elemental Capture Spectroscopy, ECS, sonde). An assessment of the commercially targeted content of the formations (e.g., hydrocarbons) can then be made based on the log measurements and the other estimates.

The drilled underground formations may include some conductive minerals (that are known as clay or clay minerals), micritic carbonates, non-metallic minerals (such as graphite), and metallic minerals (such as pyrite, precious metals, magnetite, galena, etc.). A conventional method of formation evaluation is known as "low resistivity low contrast" (LRLC) formation evaluation. For a long time, the volume of the conductive components could not be accurately quantified from standard well logs. Therefore, the effects of conductive components on porosity and resistivity logs were not accurately incorporated in LRLC formation evaluation. Consequently, LRLC formation evaluation is inaccurate in its calculation of total and effective porosity and associated water saturations.

Other conventional methods (collectively known as "Low Resistivity Pay," LRP) obtain non-conductive fluid (hydrocarbon) saturation after estimating water saturations. The LRP methods estimate water saturation using known equations, such as the ones for clastic and carbonate formations presented, for example, in the 2000 article "Recognition and evaluation of low-resistivity pay" by Worthington, P.G., published in Petroleum Geoscience, Vol.6, pp. 77-92.

LRLC method estimates conductive rock components (typically shale/clay) volume in formations and incorporates such volume estimates by calculating other formation attributes, such as effective porosity. This approach usually requires either an estimate from log measurements or a rock core-based measurement of the shale porosity, shale density or cation-exchange capacity (CEC) to analyze the shaly sand. For carbonate reservoirs, the conductive rock component is often micro/meso pores in what are termed micritic carbonate formations. These micro/meso pores often contain formation brines, which (especially if they have high salinities) cause an electrical shortcut leading to the LRLC effect even in the presence of non-conductive hydrocarbons typically found in the macro pores (although this effect depends on wettability).

U.S. Patent Nos. 4,403,290; 4,369,497; 4,502,121; and 7,168,310 describe conventional LRLC methods of formation evaluation that estimate shale volume, *Vₛₕ* = V_{Silt} + V_{clay} (where silt in made of grains in a range of about 4-60 µm, and clay has smaller grains than silt). Shale volume may be calculated using gamma ray, density, neutron, spontaneous potential, nuclear magnetic resonance (NMR), elemental capture spectroscopy and other log readings as described, for example, in U.S. Patent Nos. 4,346,592; 4,369,497; and 4,502,121. If the gamma ray log measurements are used, shale volume is estimated by using the highest and lowest readings (GR_MAX, GR_MIN) to determine the 100% and 0% shale sections across a geological unit in the formation with *Vₛₕ*=(GR-GR_MIN)/(GR_MAX-GR_MIN) where GR is the gamma ray log reading determined at every depth point across the geological unit in the formation and adjusted for each such geological unit of the formation encountered in the well logs. However, there is an inherent assumption in that 100% and 0% shale sections exist in each of the geological units, so in all the methods there exists a degree of subjectivity.

In some conventional formation evaluation methods, such as the ones described in U.S. Patent No. 4,346,592, shale and clay terms are incorrectly used as being equivalent when they are not, in fact, directly interchangeable. This error has resulted in incorrectly quantifying pure clay abundance and incorporating its effects on porosity and water saturation evaluation. The use of shale where, in fact, clay properties were required led to most prior art formation evaluations approaching quantified shale abundance and incorporating its effects in calculating other formation clay attributes. The misuse also has occurred the other way around; that is, clay properties have been used when shale properties were required. Shale is composed of mica, feldspar, iron oxide, carbonates, organics and other materials. Attempts to estimate clay from standard logs were described in U.S. Patent Nos. 4,531;188, 4,756,189; 4,502,121; and 4,369,497 that are also based on assumptions or approximations (AAs). These AAs include that the clay calculated was closer to shale than to pure clay, as in U.S. Patents Nos. 4,531,188 and 4,756,189, or an inaccurate definition of clay, as in U.S. Patents Nos. 4,369,497 and 4,502,121, because silt volume can be portioned into both part of the shale and sand volumes. Peeters Max ET AL: "Review of Existing Shaly-Sand Models and Introduction of a New Method Based on Dry-Clay Parameters Manuscript",1 January 2014, discloses to find a shaly-sand method that is derived from generally valid relations, and does not need the log properties of adjacent thick shale beds. In summary, these prior approaches led to inaccuracy in estimating total and effective porosity along with their associated water saturation due to difficulty in obtaining accurate shale volume, and subsequent implementation of the shale effects into effective porosity calculation. Consideration of the clay-bound water needs to be accounted for in the shale volume definition for all the formation volumes to be properly distributed.

The relationship between total porosity, Φₜ, effective porosity Φₑ, maximum shale porosity Φₜₛₕ, clay-bound water saturation of the relative total porosity, S_{bw}, and shale volume Vₛₕ are as follows: ${Φ}_{t} = {Φ}_{e} + {V}_{sh} {Φ}_{tsh}$ ${Φ}_{t} = {Φ}_{e} + {S}_{bw}$ where the definition of effective porosity (EP) differs between equations (1) and (2) set forth in the 2018 presentation "Lifting the fog of confusion surrounding total and effective porosity in petrophysics" by Spooner, P. (at 59^{th} Annual Logging Symposium of Society of Petrophysicists and Well Log Analysts, SPWLA, paper RRR), and the 2010 presentation "Effective Porosity: A defensible definition for shaly sands" by Peveraro (at 51^{st} Annual Logging Symposium of SPWLA, paper VV). These EP definition differences caused significant disagreement and confusion among practitioners. Obtaining an accurate EP from equation (1) requires accurate estimates for shale volume and shale porosity, which is often subjective. It is preferable to use several methods to determine the most likely volumes.

Regardless of which porosity (total or effective) is used, the same bulk volume hydrocarbon (BVH) value should be calculated. It is therefore important to know which of the definitions of effective porosity (1 or 2) has been used in a calculation and convert between them to be able to make a meaningful comparison. Equation (1) is the common definition for total porosity (TP) when EP and its associated water saturation is used. In the EP framework, effective porosity is typically calculated using density-neutron or density-NMR in a matrix inversion processing that yields additionally the shale and matrix volumes (USP6,470,274 and 6,711,502). TP is then calculated based on the estimated maximum shale porosity and shale volume in that formation.

Conversely, equation (2) is used when TP is calculated based on water saturation. Typically, the TP is calculated first directly from the density log with knowledge of the matrix and fluid densities. The clay-bound water (CBW) saturation (S_{CBW}) is then usually calculated from a core calibrated relationship of the cation-exchange capacity per pore unit volume and TP; the EP can then be derived. The difference between effective and total water saturation is the volume of the capillary-bound water associated with the shale. The shale porosity is, therefore, the sum of the CBW and capillary-bound water associated with the shale. Thus, equation (1) or the EP method can be considered a shale-based approach, whereas equation (2) or the TP method can be considered a clay-based approach.

Estimating shale porosity from porosity logs in the 100% shale sections is not accurate for multiple reasons. First, the selection of 100% shale section could be wrong. Second, the porosity tools readings in such sections can be erroneous because they may be affected by the hydrogen index, shale composition and other characteristics. Third, the socalled 100% shale section may not actually exist in the entire formation interval to be evaluated. Fourth, the selection of 100% shale section is mostly subjective (i.e., one log analyst may select a different section than another log analyst). Fifth, the response considered to be shale may in fact not be due to shale at all. Furthermore, shale porosity in sections other than the 100% shale sections (sections where shale volume is not 100%) are usually approximated by the same value estimated in the 100% shale sections. All these factors inject further inaccuracy into the shale porosity calculation. Therefore, effective porosity obtained from equation (1) is unreliable.

Similarly, equation (2) does not provide accurate effective porosity, since the approximation of S_{CBW} is via a relationship with TP that is subject to the quality of core calibration of porosity and CEC. When TP is high, the CEC is low and vice-versa. In addition, in young unconsolidated sediments, the TP in shale and sands zones can be the same, resulting in the same CEC, which is incorrect. This means that the estimate of S_{CBW} and, thus, EP can be subject to significant uncertainty.

Hence, porosity values obtained using conventional methods are unreliable being associated with some amount of inaccuracy but determining the extent of the inaccuracy requires numerical modeling. Table 1 summarizes advantages (strengths) and flaws (weaknesses) of TP and EP methods.

**Table 1**

| **Parameter** | **Merits** | **Total** | **Effective** |
|---|---|---|---|
| **Clay/Shale Volume** | Strengths | Clay volume is 'technically' correct method when known. | Shale volume is obtainable from logs via wet shale point. |
| | Weakness | Clay volume is not measured by logs, but shale is. XRD/XRF, QEMScan, FTIR can be used to measure clay volume. | Shale volume is not core measurable but can be estimated to be 65-70% of clay volume. Wet shale point is 'subjective.' |
| **Porosity** | Strengths | Provides good agreement with core analysis-based porosity. | Effective porosity is obtainable from logs via wet shale point. |
| | Weakness | The estimate of total shale/clay porosity is tenuous, especially linking cation-exchange capacity to total porosity from logs. | Calibration with core can be tenuous due to core cleaning and drying methods along with the estimate of total shale porosity. |
| **Water Saturation** | Strengths | 'Technically' correct method when sufficient core calibration is available. | Core calibration is not necessary but highly desirable. |
| | Weakness | Sufficient core calibration is rarely available and expensive. | Except for modified Simandoux they are 'technically' empirical methods. |
| **Overall** | Strengths | 'Technically' the correct approach. | Quick and easy; self-consistent. |
| | Weakness | Calibration needed and it is seldom complete. | Link to calibration/reality is subjective. |

Therefore, it is desirable to develop an approach that improves on both conventional approaches.

### SUMMARY

Methods and apparatuses according to various embodiments improve formation evaluation using both total porosity and effective porosity approaches to optimize water saturation evaluation, yielding a more accurate result than either of the approaches independently.

The invention is defined by the independent claims. Advantageous embodiments are defined in the dependent claims.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 illustrates the use of a logging tool;
Figure 2 is a sample display of results obtained using the logging tool and core analysis;
Figure 3 illustrates components of a hydrocarbons-bearing formation;
Figure 4 is a workflow of the COMET technique according to an embodiment;
Figure 5 represents results of formation evaluation of a first sample providing a comparison between the results obtained using conventional methods with the results obtained using COMET technique according to an embodiment;
Figure 6 represents results of formation evaluation of a second sample for providing a comparison between the results obtained using conventional methods with the results obtained using COMET technique according to an embodiment;
Figure 7 represents results of formation evaluation of a third sample for providing a comparison between the results obtained using conventional methods with the results obtained using COMET technique according to an embodiment;
Figures 8 and 9 are cross-plots of total porosity versus *Qᵥ*, obtained using a method employing the COMET technique for the second and third samples; and
Figure 10 is a schematic illustration of a computing device performing formation analysis including COMET technique according to an embodiment.

### DETAILED DESCRIPTION

The following description of the exemplary embodiments refers to the accompanying drawings. The same reference numbers in different drawings identify the same or similar elements. The following detailed description does not limit the invention. Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places is not necessarily referring to the same embodiment. It should be noted and understood that there can be improvements and modifications made of the present invention described in detail below without departing from the scope of the invention as set forth in the accompanying claims.

The methods described in this section include COMET technique (Conductive rock component Optimization Matrix Enhancement Technique), which enhances formation evaluation yielding more reliable results for component volumes (shale volume, clay-bound water, mineral volumes, etc.) and attributes (total porosity, effective porosity, conductivity and water saturation) associated with various types of formations (shaly sands, micritic carbonates, etc.). COMET technique minimizes the difference between TP and EP approaches adjusting volume and density of conductive rock component so that the volume of non-conductive pore fluid be the same when calculated using TP and EP approach: ${Φ}_{t} \left(1-{S}_{wt}\right) = {Φ}_{e} \left(1-{S}_{we}\right)$ where Φ*ₜ* is TP value, *S_{wt}* is total water saturation, Φ*ₑ* is EP value and *S_{we}* is effective water saturation. This type of formula applies also to other subsurface fluids such as carbon dioxide, hydrogen, fresh water, kerogen, brines, sulphur, helium, etc.

The two conventional porosity estimates have been used to derive the water saturation, but seldom were the results compared for consistency. If both porosity approaches are used to evaluate water saturation, the result may be optimized, yielding an improvement relative to using either of the approaches independently. Incorporating such an optimization has the added advantage that rock core data is no longer required for calibration, as in conventional approaches. Nevertheless, the core data may be used for independent verification of the results. Thus, the rock component volumes are optimized to be consistent with the mineral and electrical responses of those components simultaneously.

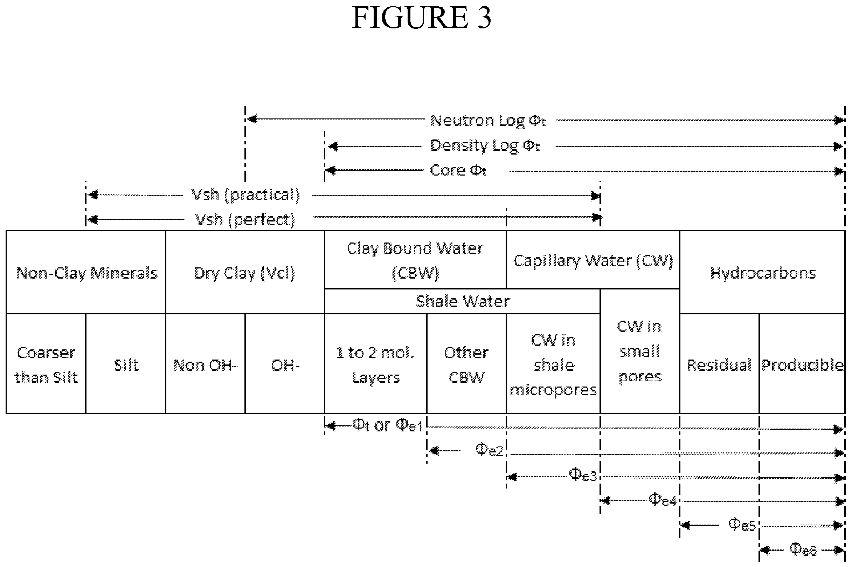

First, the framework and terminology used to describe embodiments is defined using Figure 3, which is based on an original figure in "Clay Minerals for Petroleum Geologists and Engineers" by E. Elslinger and D. Pevear in SEPM (Society for Sedimentary Geology) Short Course No. 22, published in 1988. A version of Figure 3 is included and described in the above-mentioned 2018 article by Spooner. Figure 3 illustrates components of a hydrocarbons-bearing formation, as well as links between measurements (e.g., neutron log, density log and core analysis) and porosity estimations.

The formation evaluation is an investigative technique that aims to accurately quantify formation content such as clay volume (V_{clay}), CBW, non-clay mineral volumes, and properties such as conductivity, total porosity *Φₜ,* effective porosity *Φₑ,* water saturation other attributes that characterize the formation.

Total porosity (TP) represents the formation volume that is fluid (oil, water, gas) filled, and is expressed as a percentage or a fraction of the total (sometimes called "bulk") formation volume. TP may be determined using a combination of log measurements such as density, neutron, sonic, NMR, pulsed neutron sigma and carbon/oxygen, and/or dielectric properties (e.g., conductivity).

There are many ways to define effective porosity (EP). *Φ*_{*e*1} in Figure 3 represents the volume of interconnected pore space. In formations without clay-bound water, CBW, *Φ*_{*e*1} is the same as *Φₜ.* Another value of EP, *Φ*_{*e*2}, is obtained using core samples dried in an oven to reduce CBW to a minimum. However, *Φ*_{*e*2} thus obtained is unreliable and likely not reservoir-representative.

Yet another estimate of EP, *Φ*_{*e*3}=*Φₜ - V_{cbw}* (TP value minus the volume of clay-bound water expressed in percentage of the entire volume) and another EP estimate, *Φ*_{*e*4}, is based on log measurements. This estimate is calculated as *Φ*_{*e*4} = *Φₜ - V_{shw}* (TP value minus the volume of shale water). "Shale" is a term used to describe laminated sedimentary rock made primarily of clay, mud and silt-sized particles (i.e., particles sized within about 4-60 µm). For practical purposes, as illustrated in Figure 3, Vₛₕ includes dry clays, silt-sized fraction of non-clay minerals plus CBW and capillary-bound water in shale micropores. The non-clay minerals coarser than silt (i.e., solid minerals) and the shale constitute the matrix. The result of subtracting the matrix volume from the total volume is *Φ*_{*e*4}.

Considering now shaly sand analysis (here, "shale sand" means a porous formation that contains both shale and clay), the conductive mineral component is the CBW. *V_{cbw}* determines the water saturation evaluation because due to its conductive nature, clay causes an electrical short-circuit, which, if not accounted for, leads to an under-estimation of hydrocarbons, possibly missing their presence entirely. Conversely, if *V_{cbw}* is under-estimated, it leads to over-estimating the hydrocarbon volumes. Methods of water saturation estimation are collectively known as 'Shaly Sand' equations, of which hundreds of equations exist and are well summarized in the 1985 article "The Evolution of Shaly-Sand Concepts in Reservoir Evaluation," by P.F. Worthington, published in The Log Analyst, Jan.-Feb. 1985, pp. 23-40. Incorrect *V_{cbw}* estimation (both over and under the true value) leads to poor decisions in the economic evaluation of potential hydrocarbon reservoirs. The same problem occurs when evaluating other subsurface fluids, such as (but not limited to) carbon dioxide, hydrogen, fresh water, brines, sulfur and helium.

The accuracy of TP and EP approaches (individually) to water saturation estimation are determined by the respective calibrations to core data from recovered subsurface rock samples. This, in turn, raises the question about the reliability of extracting the core data; calibrations to core data are challenged by the measurements made by wireline logging tools in-situ because core calibration data is not always available for the *V_{cbw}* and, when available, the uncertainty and error associated with *V_{cbw}* may be significant. The measurements made by the logging tools in-situ are impacted by the wellbore environment and indirect nature of the measurement methods employed (e.g., bulk density is measured by induced gamma ray attenuation related to electron rather than a direct measurement).

Three methods are currently used to calculate water saturation based on calibrated total porosity: (A) Waxman-Smits model, (B) dual water model and (C) a variation of the dual water model that uses log data only. The *V_{cbw}* may be obtained by plotting rock core sample measured CEC per pore unit volume, Qᵥ, versus TP, Φ*ₜ*, for samples and fitting a relationship *Qᵥ*=*aΦₜ^{b}* may be where a and b are fitting parameters. The water saturation may then be calculated continuously from wireline log data using Waxman-Smits equation: ${C}_{t} = \frac{{S}_{wt}^{n ∗}}{F *} \left({C}_{w}+{S}_{wt}^{- 1}{BQ}_{v}\right)$ where *Cₜ* represents formation's conductivity, *C_{w}* is formation's water conductivity, *S_{wt}* represents total water saturation, B is equivalent conductivity of exchange cations, F* is Waxman-Smits formation factor, and n* is Waxman-Smits saturation exponent. Here *F**=*F(1+R_{w} B Qᵥ), F=1*/*Φₜ^{m},* $B = \frac{0.225 T - 1.28 + 0.0004059 {T}^{2}}{1 + {R}_{w}^{1.23} \left(0.045T-0.27\right)}$ and *n*=n(1+R_{w} B Qᵥ)*, where, m the cementation exponent (usually in the range of 1.8-2.0) and n the saturation exponent (usually fixed to values close to 2), are Archie formula parameters, T is temperature (measured in °C) and *R_{w}* is formation's water resistivity (e.g., 1000/C_{w}).

Method (C), which is a variation of the dual water model (described in the 1988 article "Shaly Sands conductivity at low and high salinities" by P.N. Sen and O.A. Goode presented at 29^{th} Annual Logging symposium of SPWLA, paper F), is arguably an improvement on both Waxman-Smits and dual water, though less frequently used and simpler to implement than Waxman-Smits: ${C}_{t} = {S}_{wt}^{n} {Φ}_{t}^{m} {\left(1-0.28{Q}_{v}\right)}^{m} + \left({C}_{w}+\frac{1.93 mQv}{1 + \frac{0.7 {S}_{wt}^{n}}{{C}_{w}}}\right) + 1.3 {Φ}_{t}^{m} {Q}_{v}$

This method still suffers from dependency on the quality of the calibration of *Qᵥ* to TP, especially if the variation of Φ*ₜ* is small.

If NMR log data is available, it is possible to estimate *S_{bw}* directly: *S_{bw_nmr} = Φ*_{3*ms*}/*Φₜₙₘᵣ* (i.e., the ratio of the porosity measured for 3 ms relaxation time porosity *Φ*_{3*ms*} over total NMR porosity *Φₜₙₘᵣ*). An in-situ *Qᵥ* log can be derived dividing *S*_{*bw*_*nmr*} by B to provide (*Q_{v_nmr}* = *S_{bw_nmr}*/*B*). Typically, the porosity measured for 10 ms reflects the micritic volume in a carbonate that can be used to evaluate the occluded or conductive rock component, causing the same LRLC challenges in carbonate formations.

The dual water method has the form: ${C}_{t} = {S}_{wt}^{n} {Φ}_{t}^{m} {C}_{w} + {S}_{wt}^{n - 1} {Φ}_{t}^{m} {V}_{q} {Q}_{v} \left({C}_{bw}-{C}_{w}\right)$ ${V}_{cbw} = {V}_{q} {Q}_{v} {Φ}_{t} = {V}_{q} {CECρ}_{dcl} {V}_{dcl}$ ${S}_{bw} = {V}_{cbw} / {Φ}_{t}$ ${C}_{bw} = {C}_{sh} / {Φ}_{tsh}^{m}$ where ${V}_{q} = {\left(\frac{20455}{sal}\right)}^{0.5} \left(\frac{96}{\left(T+298\right)}\right)$, *sal* being formation's water salinity in ppm, CEC is cation-exchange capacity, *ρ_{dcl}* is dry clay density, *V_{dcl}* is dry clay volume, *C_{bw}* conductivity of CBW, Cₛₕ is shale conductivity, and Φₜₛₕ is total shale porosity. The clay-bound water saturation (in 9) allows the simplification to: ${C}_{t} = {S}_{wt}^{n} {Φ}_{t}^{m} {C}_{w} + {S}_{wt}^{n - 1} {S}_{bw} {Φ}_{t}^{m} \left({C}_{bw}-{C}_{w}\right)$ which can be more conveniently parameterized when noting that: ${S}_{bw} = {V}_{sh} {Φ}_{tsh} / {Φ}_{t}$ ${Φ}_{tsh} = \left({ρ}_{dcl}-{ρ}_{sh}\right) / \left({ρ}_{dcl}-{ρ}_{fl}\right)$ where *ρₛₕ* is shale density and *ρ_{fl}* is fluid density. The shale and fluid densities can be obtained from log analysis and using an iterative solver (described, for example, in U.S. Patent Nos. 6,470, 274 and 6,711,502), respectively.

The fluid densities of the mud filtrate or formation brine and hydrocarbon are typically known from fluid samples, resistivity methods or pressure gradient-based calculations. Thus, the largest uncertainty is the dry clay density that is not readily measurable, since a pure dry clay does not exist in-situ nor is easily extractable in the laboratory. The volume of dry clay can be calculated via: ${V}_{dcl} = {V}_{sh} \left(1-{Φ}_{tsh}\right)$

Turning now to the EP approaches, most of the available solutions are empirical in nature. However, the Simandoux and modified Simandoux methods (described, for example, in the 1969 article "Formation water saturation in Shaly Sands," Ch. Bardon and B. Pied, presented at the 10th SPWLA Annual Logging Symposium, Paper Z) are experimentally based. This provides an alternative basis for the calculation of water saturation in an effective porosity framework such that modified Simandoux water saturation is defined as: ${C}_{t} = {S}_{we}^{n} {Φ}_{e}^{m} {C}_{w} + {S}_{we}^{n - 1} {V}_{sh} {C}_{sh}$ where *S_{we}* is effective water saturation (as defined in the 1971 article "Evaluation of Water Saturations in Shaly Formations," by Poupon et al., a pre-print of the SPWLA 10th Annual Logging Symposium, pp. 1-2). This version of the modified Simandoux equation is most frequently used, although the following version is also used: ${C}_{t} = \frac{{S}_{we}^{n} {Φ}_{e}^{m} {C}_{w}}{\left(1-{V}_{sh}\right)} + {S}_{we}^{n - 1} {V}_{sh} {C}_{sh} .$

The EP water saturation methods are often favored by analysts due to their simplicity, ease of application and no requirement of core calibration. These advantages are also their weakness because they become subjective and particularly sensitive to the shale volume and shale resistivity used.

Several techniques attempt to alleviate the need for core calibration of the total porosity methods. Most notable are the Juhász's normalized *Qᵥ* method (described in the 1979 article "The central role of Qv and formation-water salinity in the evaluation of shaly formations" presented at SPWLA 20th Annual Logging Symposium, paper AA, and the 1981 article "Normalised Q - the key to shaly sand evaluation using the Waxman-Smits equation in the absence of core data" presented at SPWLA 22nd Annual Logging Symposium, paper Z. I. Juhász being author of both articles) and the "difference method" (described in the 2014 article "Review of existing shaly-sand models and introduction of a new method based on dry-clay parameters" by Peters, M. and Holmes, A., published in Petrophysics, v.55 no. 6, pp. 543-553). Both of these methods are based on the Waxman-Smits total porosity method and allow *Qᵥ* to be calculated only from wireline log data, an approach that introduces subjectivity and sensitivity due to the shale volume and shale resistivity used. The above-cited 2014 article by Peters et al. additionally compares several water saturation calculations and translates the modified Simandoux and Indonesia equation (introduced in the 1971 article "Log analysis of sand-shale sequence - a systematic approach" by Poupon et al., published in Journal of Petrochemical Technology, July 1970, pp. 867-881) into equivalent TP formulation. These comparisons show that small differences in the formulations yield the differences in the resultant water saturations calculated by each method, and hence (as discussed in the 2014 article by Peters et al.), there is no simple analytical method to resolve the total and effective porosity frameworks for water saturation.

The COMET method is used for LRLC shaly sands and carbonates reservoirs. The formation water saturations, Sₓₒ, are calculated for a rock volume (called "invaded zone") in which logs include porosity measurements (acquired, for example, using neutron-porosity tool(s)) and a resistivity measurement (obtained using, for example, a micro spherically focused logging tool or dielectric logs that sense substantially the same volume as the porosity tools). The COMET technique provides the flexibility of solving for the rock component volumes, porosities and saturations in the invaded zone. Subsequentially a preferred, and now calibrated, conventional water saturation equation may then be used in other zones investigated by the deeper reading resistivity logs for the economic evaluation of the reservoir.

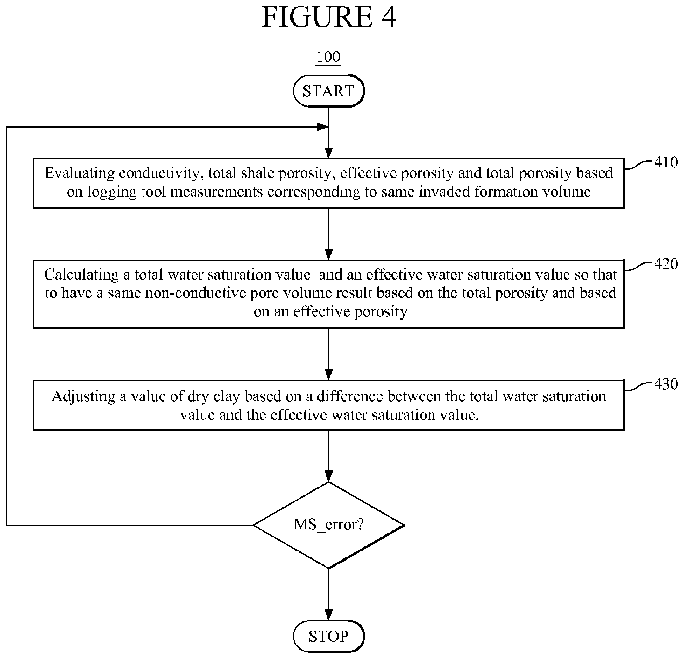

Flowchart of a formation evaluation method 400 that incorporates the COMET technique is illustrated in Figure 4. The method includes calculating conductivity, total shale porosity and total porosity based on logging tool measurements corresponding to same formation volume at 410. The dual water and modified Simandoux equations of conductivity (10) and (14) may be used.

The method further includes, at 420, calculating a total water saturation value, S_{xot_DW,} and an effective water saturation value, S_{xoe_DW,} of the invaded zone so that to have a same non-conductive pore volume result based on the total porosity and based on an effective porosity. In one embodiment S_{xot_DW} using dual water method, for example, using formula: ${C}_{xo} - {S}_{{xot}_{DW}}^{n} {Φ}_{t}^{m} {C}_{mf} + {S}_{{xot}_{DW}}^{n - 1} {S}_{bw} {Φ}_{t}^{m} \left({C}_{bw}-{C}_{mf}\right) = 0$ where *C_{mf}* is the mud filtrate conductivity value.

The EP value (Φₑ₄) may be calculated together with sand volume (V_{sd}) (here, "sand" means particles larger than 50 µm, consisting of quartz and feldspar minerals) and shale volume (Vₛₕ) by matrix inversion in the invaded zone: $\left(\begin{matrix}{ρ}_{sd} & {ρ}_{sh} & {ρ}_{fl} \\ {Φ}_{nsd} & {Φ}_{nsh} & {Φ}_{nfl} \\ 1 & 1 & 1\end{matrix}\right) \left(\begin{matrix}{V}_{sd} \\ {V}_{sh} \\ {Φ}_{e 4}\end{matrix}\right) = \left(\begin{matrix}ρ \\ {Φ}_{n} \\ 1\end{matrix}\right)$ where *ρ_{sd}* is sand density (quartz density 2.65 g/cc may be used though, if core grain density data is available, then this density value is adjusted accordingly), *ρₛₕ* is shale density (obtained from the wet shale point of density-neutron log cross-plot), *ρ_{fl}* is fluid density, *Φ_{nsd}* is neutron porosity sand value (quartz value of -0.018v/v is used though, if core minerology data is available, then this value is adjusted accordingly), *Φₙₛₕ* is neutron porosity shale value (obtained from the wet shale point of density-neutron log cross-plot), *Φ_{nfl}* is neutron porosity fluid value, p is bulk density log value, and *Φₙ* is neutron porosity log value. A mix of mud filtrate and original fluids in the invaded zone is assumed to have initially the effective water saturation of S_{xoe_DW}=1 to calculate: ${ρ}_{fl} = {ρ}_{mf} {S}_{xoe _ DW} + {ρ}_{hc} \left(1-{S}_{xoe _ DW}\right)$ ${Φ}_{nfl} = {Φ}_{nmf} {S}_{xoe _ DW} + {Φ}_{nhc} \left(1-{S}_{xoe _ DW}\right)$ where *ρ_{mf}* is the mud filtrate density, *ρ_{hc}* is the hydrocarbon density (obtained from fluid sample analysis or estimated), *Φ_{nmf}* is neutron porosity mud filtrate value, and Φ*_{nhc}* is neutron porosity hydrocarbon value (obtained from fluid sample analysis or estimated) as described in the 2018 article by Spooner, P. Using the effective porosity value, *Φₑ₄,* the total porosity value may be calculated using equation (2), where *Φₜₛₕ* (the total shale porosity value) is calculated using equation (12) initialized with a typical dry clay density, *ρ_{dcl},* of, e.g., 2.9 g/cc.

Then, the water saturation value in EP framework, *S_{xoe_DW,,}* is calculated so that non-conductive pore volume to be the same whether calculated using TP value or EP value (see above equation (3)): ${S}_{xoe _ DW} = 1 - \frac{{Φ}_{t}}{{Φ}_{e 4}} \left(1-{S}_{{xot}_{DW}}\right) .$

A measure of the difference between water saturation values, *MS_error* is: $MS _ error = {C}_{xo} - {S}_{xoe _ DW}^{n} {Φ}_{e 4}^{m} {C}_{mf} - {S}_{xoe _ DW}^{n - 1} {V}_{sh} {C}_{sh} .$

*MS_error* is then used to adjust the value of the dry clay density at 430. For example, the dry clay density, *ρ_{dcl},* may be iterated on each iteration until convergence: ${ρ}_{dcl _ new} = {ρ}_{{dcl}_{old}} \pm MS _ error \left({ρ}_{dcl _ current}-{ρ}_{{dcl}_{old}}\right) .$ where *ρ*_{*dcl*_*current*} is the dry clay density value calculated in the current iteration and 'old' is inherited from the previous iteration. If the error increases (i.e., difference between previous and current error is negative) relative to the previous iteration then '-' is used and conversely, if error decreases (i.e., difference between previous and current error is positive) then '+' is used. The goal is to get the error as close to 0 as possible. As suggested by decision (diamond) block in Figure 4, when error can no longer be reduced or is less than a predetermined threshold, the iterative process stops.

An updated value *Φₜ* may then be calculated using equation (1). The clay-bound water saturation, *S_{bw}*, may be recalculated via equation (11) in view of total shale porosity obtained using equation (12) and shale volume obtained using equation (13). The component volumes and effective porosity are then recalculated, the entire process being iterated until *MS_error* becomes smaller than a predetermined value or another convergence criterion is met. Note that *C_{mf}* is the mud filtrate conductivity value. In this way, both dual water and modified Simandoux are solved in their original forms and until convergence is achieved to provide total and effective porosities and corresponding water saturations that are self-consistent and valid.

An additional benefit of COMET is that *Qᵥ* and CEC can be calculated directly from the log measurements themselves via the following equations: ${Q}_{v} = {S}_{wb} \left(\frac{{V}_{dcl}}{{V}_{sh}}\right) / {Φ}_{t}$ $CEC = \frac{100 \left({Q}_{v}-{Φ}_{t}\right)}{{ρ}_{dcl} {V}_{dcl}} .$

While Φ*ₑ₄* is obtained together with *Vₛₕ* and *V_{sd}* via matrix inversion (17) from log responses, Φₑ₃ can be extracted along with the silt in shale porosity (Φ*ₛₜₛₕ*) and volume (*Vₛₜₛₕ*) via a calculation of wet clay porosity (Φ*_{wcl}*) as follows: ${S}_{bw} = {V}_{sh} {Φ}_{tsh} / {Φ}_{t} = {V}_{dcl} {Φ}_{wcl} / {Φ}_{t}$ ${Φ}_{wcl} = {V}_{sh} {Φ}_{tsh} / {V}_{dcl}$ ${Φ}_{stsh} = {Φ}_{tsh} - {Φ}_{wcl}$ ${V}_{stsh} = \left({V}_{sh}-{V}_{dcl}\right) / {V}_{sh} .$ ${Φ}_{e 3} = {Φ}_{e 4} + {Φ}_{stsh} .$

Once convergence is achieved, either total or effective water saturation equations may be used for other zones considering the parameters (such as dry clay density) calibrated.

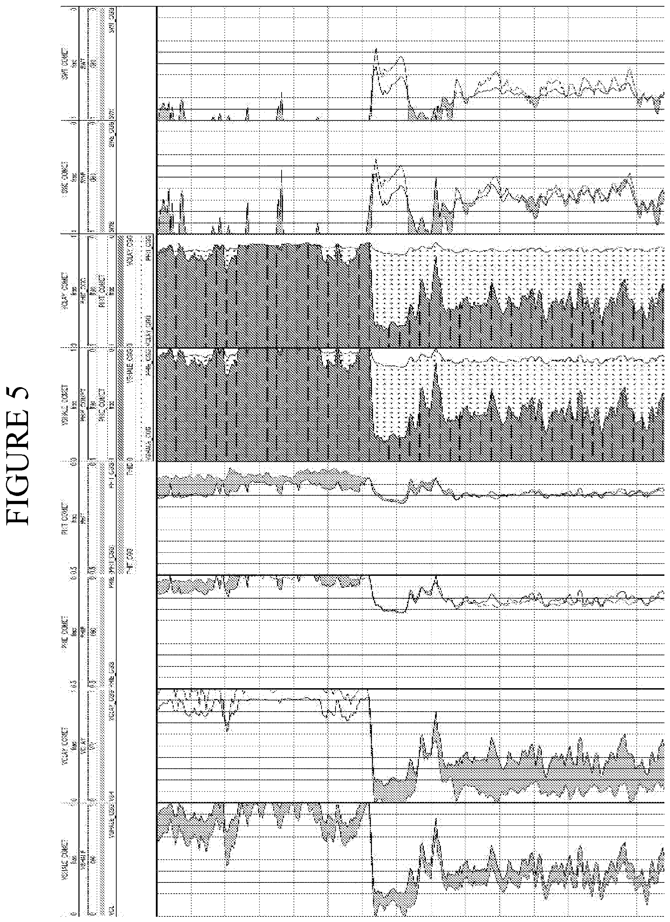

Figure 5 shows graphs (with depth increasing downward) of shale volume, clay volume, effective porosity, effective water saturation results obtained using conventional formation evaluation versus corresponding results obtained using the COMET technique. The graphs (from left to right) represent the shale volume, the clay volume, effective porosity, total porosity, shale and sand volume, clay and quartz volume, effective water saturation and total water saturation. In the total shale volume, the effective porosity and the effective water saturation graphs, the results obtained using conventional formation evaluation are represented as dotted curves and the results obtained using a method including the COMET technique according to an embodiment are represented as solid curves. The difference in shading shows where the results obtained using conventional method are less than the ones obtained using the COMET technique. The values illustrated in Figure 5 correspond to a sand interval in a well where oil flows without formation water. The COMET results agree more closely with the production results than the results obtained using the conventional method, which suggested that formation water would be produced.

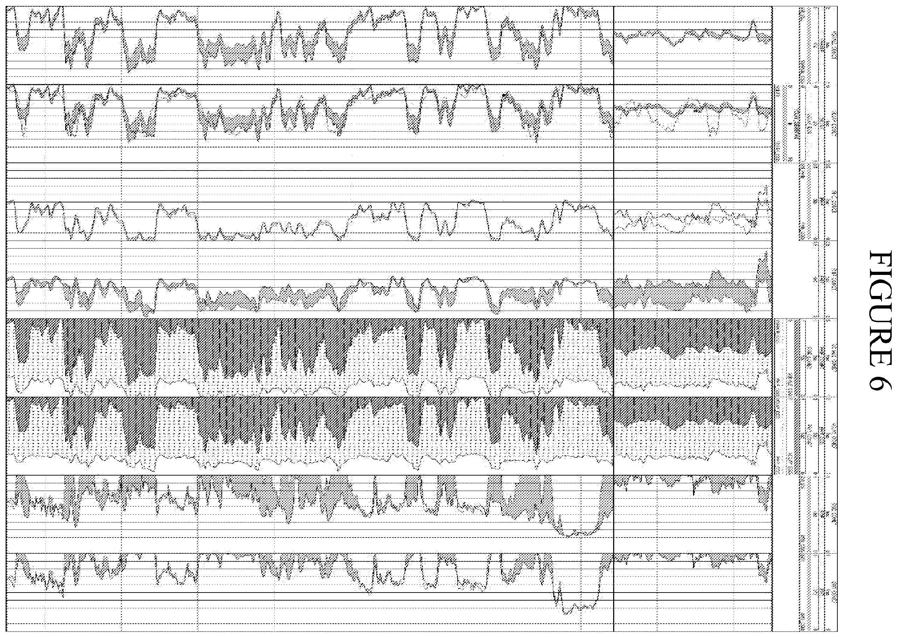

A second example is illustrated in Figure 6, where the results are obtained and illustrated similarly to Figure 5. Additionally, Figure 6 displays clay volumes obtained using an ECS log (stippled curve) and QEMScan core sample results (crosses). This well produces from multiple sand intervals and flows gas condensate without formation water. The COMET results agree more closely with the clay volumes computed based on the ECS Geochemical log and QEMScan core results. The improved clay volume assessment leads to total and effective porosity values higher than the ones conventionally obtained leading to lower water saturation values, thus giving improved hydrocarbon volumes in line with higher-than-conventionally predicted production volumes.

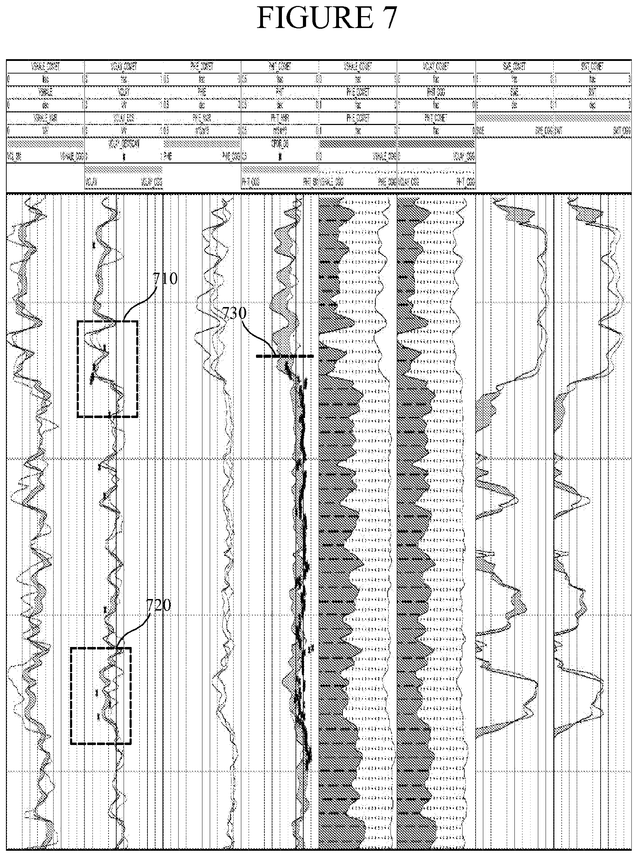

A third example is similarly displayed in Figure 7. Additionally, Figure 7 displays the shale volumes with NMR log (stippled curve), the clay volumes with ECS Geochemical log (stippled curve) and QEMScan core sample results (crosses, e.g., in boxes 710 and 720), effective porosity with NMR effective porosity log (stippled curve), the total porosity values obtained using equation 1, NMR total porosity log (stippled curve) and core analysis (crosses, below line 730), and the total water saturation (dotted curves) conventionally obtained and obtained using COMET (solid curves). This well produces hydrocarbons from multiple sand intervals, flowing oil without formation water. In this case, conventional and COMET results agree well with the clay volumes from the ECS Geochemical log and QEMScan core results. The COMET results indicate slightly higher clay and shale volumes; the effect of this assessment is that the total and effective porosity values are slightly higher, leading to lower water saturation values, thus giving improved hydrocarbon volumes confirmed by higher-than-conventionally-expected production volumes.

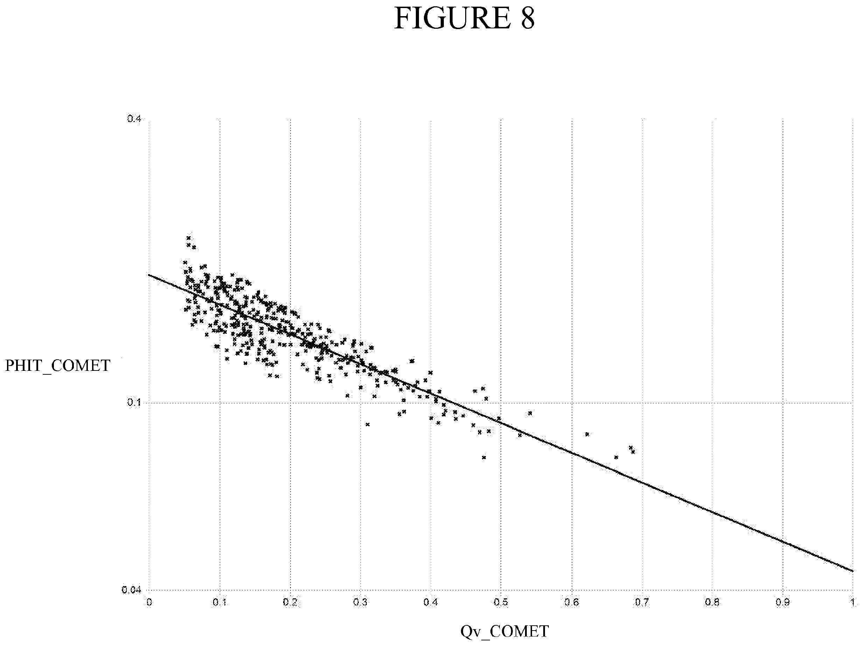

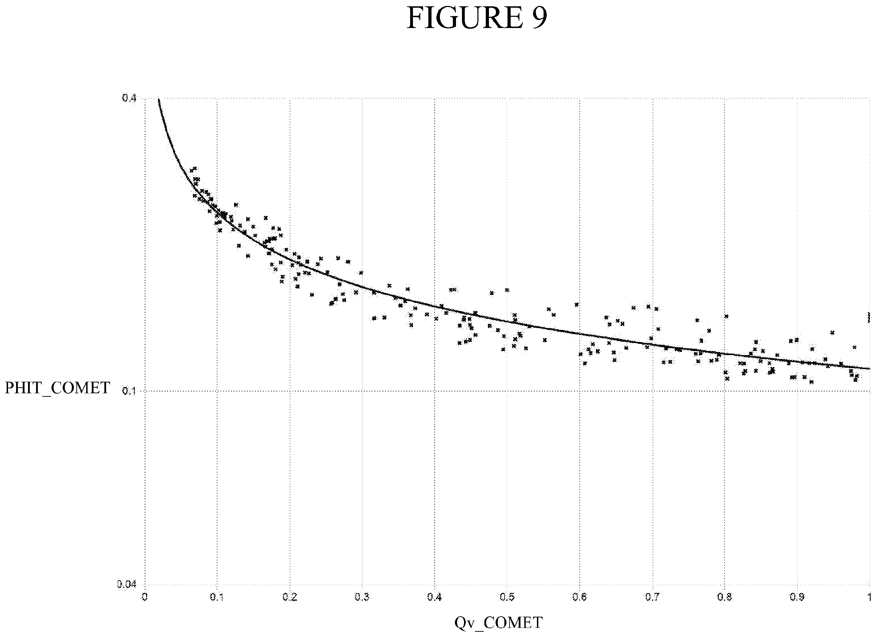

Figures 8 and 9 are cross-plots of total porosity, *Φₜ* (decimal not percentage here) versus cation-exchange capacity per unit volume, *Qᵥ* (measured in meq per unit pore volume) obtained using a method employing the COMET technique for the second and third sample, respectively.

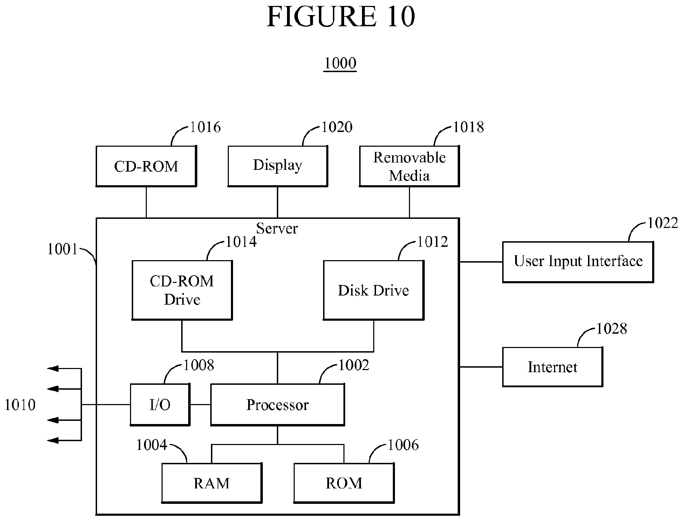

The above-discussed methods may be implemented in a computing device 1000 as illustrated in Figure 10. Hardware, firmware, software or a combination thereof may be used to perform the various steps and operations described herein.

Exemplary computing device 1000 suitable for performing the activities described in the exemplary embodiments may include a server 1001. Server 1001 may include a central processor (CPU or GPU) 1002 coupled to a random access memory (RAM) 1004 and to a read-only memory (ROM) 1006. ROM 1006 may also be other types of storage media to store programs, such as programmable ROM (PROM), erasable PROM (EPROM), etc. Processor 1002 may communicate with other internal and external components through input/output (I/O) circuitry 1008 and bussing 1010 to provide control signals and the like. Processor 1002 carries out a variety of functions as are known in the art, as dictated by software and/or firmware instructions.

Server 1001 may also include one or more data storage devices, including hard drives 1012, CD-ROM drives 1016 and other hardware capable of reading and/or storing information, such as DVD, etc. In one embodiment, software for carrying out the above-discussed steps may be stored and distributed on a CD-ROM or DVD 1016, a USB storage device 1018 or other form of media capable of portably storing information. These storage media may be inserted into, and read by, devices such as CD-ROM drive 1014, disk drive 1012, etc. Server 1001 may be coupled to a display 1020, which may be any type of known display or presentation screen, such as LCD, plasma display, cathode ray tube (CRT), etc. A user input interface 1022 is provided, including one or more user interface mechanisms such as a mouse, keyboard, microphone, touchpad, touch screen, voice-recognition system, etc.

Server 1001 may be coupled to other devices, such as sources, detectors, etc. The server may be part of a larger network configuration as in a global area network such as the Internet 1028, which allows ultimate connection to various computing devices.

The embodiments described in this section provide methods and devices performing formation evaluation using COMET technique. It should be understood that this description is not intended to limit the invention. Further, in the detailed description of the exemplary embodiments, numerous specific details are set forth in order to provide a comprehensive understanding of the invention.

It should be noted and understood that there can be improvements and modifications made of the present invention described in detail above without departing from the scope of the invention as set forth in the accompanying claims.

This written description uses examples of the subject matter disclosed to enable any person skilled in the art to practice the same, including making and using any devices or systems and performing any incorporated methods.

## Claims

1. A computer-implemented method (400) of formation evaluation, comprising:
evaluating (410) conductivity, total shale porosity, effective porosity and total porosity based on logging tool measurements corresponding to same invaded formation volume;
calculating (420) a total water saturation value and an effective water saturation value using the conductivity, the total shale porosity, the effective porosity and the total porosity so that to have a same non-conductive pore volume result based on the total porosity and based on an effective porosity; and **characterized by**:
adjusting (430) a value of dry clay density based on a difference between the total water saturation value and the effective water saturation value.

2. The method of claim 1, further comprising:
calculating one or more of clay-bound water saturation, wet clay porosity, effective porosity, hydrocarbons volume and cation-exchange capacity for the invaded formation volume.

3. The method of claim 1, wherein the evaluating of the conductivity, the total shale porosity and the total porosity, the calculating of the total water saturation value and the effective water saturation, and the adjusting of the value of dry clay density are performed repeatedly until the difference between the total water saturation value and the effective water saturation value decreases below a predetermined threshold or no longer decreases.

4. The method of claim 3, further comprising:
calculating the one or more of clay-bound water saturation, wet clay porosity, effective porosity and cation exchange for formation volumes other than the invaded formation volume using the adjusted value of the dry clay density and logging tool measurements corresponding to the formation volumes other than the invaded formation volume, respectively.

5. The method of claim 3, further comprising:
receiving core analysis results for a sample associated with a well depth; and
comparing the core analysis results with corresponding values obtained using the adjusted value of the dry clay density and logging tool measurements corresponding to the depth.

6. The method of claim 1, wherein the evaluating includes obtaining values of a sand volume, *V_{sd}*, a shale volume, *Vₛₕ* and an effective porosity, *Φ*_{*e*4}, by matrix inversion as follows: $\left(\begin{matrix}{ρ}_{sd} & {ρ}_{sh} & {ρ}_{fl} \\ {Φ}_{nsd} & {Φ}_{nsh} & {Φ}_{nfl} \\ 1 & 1 & 1\end{matrix}\right) \left(\begin{matrix}{V}_{sd} \\ {V}_{sh} \\ {Φ}_{e 4}\end{matrix}\right) = \left(\begin{matrix}ρ \\ {Φ}_{n} \\ 1\end{matrix}\right)$ where *ρ_{sd}* is sand density, *ρₛₕ* is shale density, *ρ_{fl}* is fluid density, Φ*_{nsd}* is neutron porosity sand value, Φ*ₙₛₕ* is neutron porosity shale value, Φ*_{nfl}* is neutron porosity fluid value, *ρ* is bulk density log value, and Φ*ₙ* is neutron porosity log value.

7. The method of claim 6, wherein
the fluid density is calculated for a mix of mud filtrate and original fluids in an invaded formation volume *ρ_{fl} = ρ_{mf}S_{xoe_{DW}} + ρ_{hc}*(1 *- S_{xoe_{DW}}*) and the neutron porosity fluid value is *Φ_{nfl}* = *Φ_{nmf}S_{xoe_{DW}}* + *Φ_{nhc}*(1 *- S_{xoe_{DW}}*) where *ρ_{mf}* represents a mud filtrate density, *ρ_{hc}* represents a hydrocarbon density, *Φ_{nmf}* represents a neutron porosity mud filtrate value, and Φ*_{nhc}* represents a neutron porosity hydrocarbon value.

8. The method of claim 6, wherein
the total shale porosity value is calculated as ${Φ}_{tsh} = \left({ρ}_{dcl}-{ρ}_{sh}\right) / \left({ρ}_{dcl}-{ρ}_{fl}\right) ,$ an initially value of the effective water saturation being S_{xoe_DW}=1 and an initial value of dry clay density, *ρ_{dcl},* of 2.9 g/cc.

9. The method of claim 1, further comprising:
evaluating a cation-exchange capacity, CEC, and/or CEC per unit volume, *Qᵥ* as: ${Q}_{v} = \frac{{S}_{wb} \left(\frac{{V}_{dcl}}{{V}_{sh}}\right)}{{Φ}_{t}}$ $CEC = \frac{100 \left({Q}_{v}-{Φ}_{t}\right)}{{ρ}_{dcl} {V}_{dcl}} .$

10. A formation evaluation apparatus (1000) comprising:
an interface (1008) configured to receive logging tool measurements; and
a data processing unit (1002) connected to the interface and configured:
to evaluate conductivity, total shale porosity, effective porosity and total porosity based on the logging tool measurements corresponding to same invaded formation volume;
to a total water saturation value and an effective water saturation value using dual water method, the conductivity, the total shale porosity and the total porosity so that to have a same non-conductive pore volume result based on
total porosity and based on an effective porosity; and **characterized in that** the data processing unit (1002) is further configured:
to adjust a value of dry clay density based on a difference between the total water saturation value and the effective water saturation value.

11. The formation evaluation apparatus of claim 10, wherein the data processing unit is further configured to calculate one or more of clay-bound water saturation, wet clay porosity, hydrocarbons volume and cation-exchange capacity for the invaded formation volume.

12. The formation evaluation apparatus of claim 10, wherein the data processing unit evaluates of the conductivity, the total shale porosity and the total porosity, determines the total water saturation, calculates the effective water saturation and adjusts the value of dry clay density repeatedly until the difference between the total water saturation value and the effective water saturation value decreases below a predetermined threshold.

13. The formation evaluation apparatus of claim 12, wherein the data processing unit is further configured to calculate the one or more of clay-bound water saturation, wet clay porosity, effective porosity and cation exchange for formation volumes other than the invaded formation volume using the adjusted value of the dry clay density and logging tool measurements corresponding to the formation volumes other than the invaded formation volume, respectively.

14. The formation evaluation apparatus of claim 12, wherein the data processing unit is further configured:
to receive core analysis results for a sample associated with a well depth; and
to compare the core analysis results with corresponding values obtained using the adjusted value of the dry clay density and logging tool measurements corresponding to the depth.

15. A computer readable recording medium (1004) non-transitorily storing executable codes that when executed by a computer (1000) make the computer perform a method (400) of formation evaluation comprising:
evaluating (410) conductivity, total shale porosity, effective porosity and total porosity based on logging tool measurements corresponding to same invaded formation volume;
calculating (420) a total water saturation value and an effective water saturation value using the conductivity, the total shale porosity, the effective porosity and the total porosity so that to have a same non-conductive pore volume result based on the total porosity and based on the effective porosity; and **characterized by**:
adjusting (430) a value of dry clay density based on a difference between the total water saturation value and the effective water saturation value.

## Patentansprüche

1. Computerimplementiertes Verfahren (400) zur Formationsbewertung, umfassend:
Bewerten (410) von Leitfähigkeit, Schiefergesamtporosität, effektiver Porosität und Gesamtporosität basierend auf Vermessungswerkzeugmessungen, die dem gleichen durchdrungenen Formationsvolumen entsprechen;
Berechnen (420) eines Gesamtwassersättigungswerts und eines effektiven Wassersättigungswerts unter Verwendung der Leitfähigkeit, der Schiefergesamtporosität, der effektiven Porosität und der Gesamtporosität, so dass basierend auf der Gesamtporosität und basierend auf einer effektiven Porosität ein gleiches Ergebnis für das nicht leitfähige Porenvolumen erhalten wird; und
**gekennzeichnet durch**:
Anpassen (430) eines Werts der Tontrockendichte basierend auf einer Differenz zwischen dem Gesamtwassersättigungswert und dem effektiven Wassersättigungswert.

2. Verfahren nach Anspruch 1, ferner umfassend:
Berechnen eines oder mehrerer von tongebundener Wassersättigung, Porosität des nassen Tons, effektiver Porosität, Kohlenwasserstoffvolumen und Kationenaustauschkapazität für das durchdrungene Formationsvolumen.

3. Verfahren nach Anspruch 1, wobei das Bewerten der Leitfähigkeit, der Schiefergesamtporosität und der Gesamtporosität, das Berechnen des Gesamtwassersättigungswerts und der effektiven Wassersättigung und das Anpassen des Werts der Tontrockendichte wiederholt durchgeführt werden, bis die Differenz zwischen dem Gesamtwassersättigungswert und dem effektiven Wassersättigungswert unter einen vorbestimmten Schwellenwert abnimmt oder nicht mehr abnimmt.

4. Verfahren nach Anspruch 3, ferner umfassend:
Berechnen des einen oder der mehreren von tongebundener Wassersättigung, Porosität des nassen Tons, effektiver Porosität und Kationenaustausch für Formationsvolumina außer dem durchdrungenen Formationsvolumen unter Verwendung des angepassten Werts der Tontrockendichte bzw. der Vermessungswerkzeugmessungen, die den Formationsvolumina außer dem durchdrungenen Formationsvolumen entsprechen.

5. Verfahren nach Anspruch 3, ferner umfassend:
Empfangen von Kernanalyseergebnissen für eine Probe, die mit einer Bohrlochtiefe assoziiert ist; und
Vergleichen der Kernanalyseergebnisse mit entsprechenden Werten, die unter Verwendung des angepassten Wertes der Tontrockendichte und den der Tiefe entsprechenden Vermessungswerkzeugmessungen erhalten werden.

6. Verfahren nach Anspruch 1, wobei das Bewerten Erhalten von Werten eines Sandvolumens, V_{sd}, eines Schiefervolumens, Vₛₕ und einer effektiven Porosität, Φₑ₄, durch Matrixinversion wie folgt beinhaltet: $\left(\begin{matrix}{ρ}_{sd} & {ρ}_{sh} & {ρ}_{fl} \\ {Φ}_{nsd} & {Φ}_{nsh} & {Φ}_{nfl} \\ 1 & 1 & 1\end{matrix}\right) \left(\begin{matrix}{V}_{sd} \\ {V}_{sh} \\ {Φ}_{e 4}\end{matrix}\right) = \left(\begin{matrix}ρ \\ {Φ}_{n} \\ 1\end{matrix}\right)$ wobei ρ_{sd} die Sanddichte ist, ρₛₕ die Schieferdichte ist, ρ_{fl} die Fluiddichte ist, Φ_{nsd} der Neutronenporositätswert für Sand ist, Φₙₛₕ der Neutronenporositätswert für Schiefer ist, Φ_{nfl} der Neutronenporositätswert für Fluid ist, p der Rohdichtevermessungswert ist und Φₙ der Neutronenporositätsvermessungswert ist.

7. Verfahren nach Anspruch 6, wobei
die Fluiddichte für ein Gemisch aus Schlammfiltrat und ursprünglichen Fluiden in einem durchdrungenen Formationsvolumen *ρ_{fl}* = *ρ_{mf}S_{xoe_{DW}}* + *ρ_{hc}*(1 - *S_{xoe_{DW}}*) berechnet wird und der Neutronenporositätswert für Fluid *Φ_{nfl}* = *Φ_{nmf}S_{xoe_{DW}}* + *Φ_{nhc}*(1 - *S_{xoe_{DW}}*) ist, wobei ρ_{mf} eine Schlammfiltratdichte darstellt, Φ_{hc} eine Kohlenwasserstoffdichte darstellt, Φ_{nmf} einen Neutronenporositätswert für Schlammfiltrat darstellt und ρ_{nhc} einen Neutronenporositätswert für Kohlenwasserstoff darstellt.

8. Verfahren nach Anspruch 6, wobei
der Schiefergesamtporositätswert berechnet wird als ${Φ}_{tsh} = \left({ρ}_{dcl}-{ρ}_{sh}\right) / \left({ρ}_{dcl}-{ρ}_{fl}\right) ,$
wobei ein Anfangswert der effektiven Wassersättigung S_{xoe_DW}=1 ist und ein Anfangswert der Tontrockendichte, ρ_{dcl}, 2,9 g/cc beträgt.

9. Verfahren nach Anspruch 1, ferner umfassend:
Bewerten einer Kationenaustauschkapazität, CEC, und/oder einer CEC pro Volumeneinheit, Q_{V}, als: ${Q}_{v} = \frac{{S}_{wb} \left(\frac{{V}_{dcl}}{{V}_{sh}}\right)}{{Φ}_{t}}$ $CEC = \frac{100 \left({Q}_{v}-{Φ}_{t}\right)}{{ρ}_{dcl} {V}_{dcl}} .$

10. Formationsbewertungseinrichtung (1000), umfassend:
eine Schnittstelle (1008), die dazu ausgelegt ist, Vermessungswerkzeugmessungen zu empfangen; und eine Datenverarbeitungseinheit (1002), die mit der Schnittstelle verbunden und zu Folgendem ausgelegt ist:
Bewerten von Leitfähigkeit, Schiefergesamtporosität, effektiver Porosität und Gesamtporosität basierend auf Vermessungswerkzeugmessungen, die dem gleichen durchdrungenen Formationsvolumen entsprechen;
eines Gesamtwassersättigungswerts und eines effektiven Wassersättigungswerts unter Verwendung des Dual-Water-Verfahrens, der Leitfähigkeit, der Schiefergesamtporosität, und der Gesamtporosität, so dass basierend auf der Gesamtporosität und basierend auf einer effektiven Porosität ein gleiches Ergebnis für das nicht leitfähige Porenvolumen erhalten wird; und **dadurch gekennzeichnet, dass** die Datenverarbeitungseinheit (1002) ferner zu Folgendem ausgelegt ist:
Anpassen eines Werts der Tontrockendichte basierend auf einer Differenz zwischen dem Gesamtwassersättigungswert und dem effektiven Wassersättigungswert.

11. Formationsbewertungseinrichtung nach Anspruch 10, wobei die Datenverarbeitungseinheit ferner dazu ausgelegt ist, eine oder mehrere von tongebundener Wassersättigung, Porosität des nassen Tons, Kohlenwasserstoffvolumen und Kationenaustauschkapazität für das durchdrungene Formationsvolumen zu berechnen.

12. Formationsbewertungseinrichtung nach Anspruch 10, wobei die Datenverarbeitungseinheit wiederholt die Leitfähigkeit, die Schiefergesamtporosität und die Gesamtporosität bewertet, die Gesamtwassersättigung bestimmt, die effektive Wassersättigung berechnet und den Wert der Tontrockendichte anpasst, bis die Differenz zwischen dem Gesamtwassersättigungswert und dem effektiven Wassersättigungswert unter einen vorbestimmten Schwellenwert abnimmt.

13. Formationsbewertungseinrichtung nach Anspruch 12, wobei die Datenverarbeitungseinheit ferner dazu ausgelegt ist, das eine oder die mehreren von tongebundener Wassersättigung, Porosität des nassen Tons, effektiver Porosität und Kationenaustausch für Formationsvolumina außer dem durchdrungenen Formationsvolumen unter Verwendung des angepassten Werts der Tontrockendichte bzw. der Vermessungswerkzeugmessungen, die den Formationsvolumina außer dem durchdrungenen Formationsvolumen entsprechen, zu berechnen.

14. Formationsbewertungseinrichtung nach Anspruch 12, wobei die Datenverarbeitungseinheit ferner zu Folgendem ausgelegt ist:
Empfangen von Kernanalyseergebnissen für eine Probe, die mit einer Bohrlochtiefe assoziiert ist; und
Vergleichen der Kernanalyseergebnisse mit entsprechenden Werten, die unter Verwendung des angepassten Wertes der Tontrockendichte und den der Tiefe entsprechenden Vermessungswerkzeugmessungen erhalten werden.

15. Computerlesbares Aufzeichnungsmedium (1004), das ausführbare Codes nichtflüchtig speichert, die, wenn sie durch einen Computer (1000) ausgeführt werden, den Computer veranlassen, ein Verfahren (400) zur Formationsbewertung durchzuführen, umfassend:
Bewerten (410) von Leitfähigkeit, Schiefergesamtporosität, effektiver Porosität und Gesamtporosität basierend auf Vermessungswerkzeugmessungen, die dem gleichen durchdrungenen Formationsvolumen entsprechen;
Berechnen (420) eines Gesamtwassersättigungswerts und eines effektiven Wassersättigungswerts unter Verwendung der Leitfähigkeit, der Schiefergesamtporosität, der effektiven Porosität und der Gesamtporosität, so dass basierend auf der Gesamtporosität und basierend auf der effektiven Porosität ein gleiches Ergebnis für das nicht leitfähige Porenvolumen erhalten wird; und
**gekennzeichnet durch**:
Anpassen (430) eines Werts der Tontrockendichte basierend auf einer Differenz zwischen dem Gesamtwassersättigungswert und dem effektiven Wassersättigungswert.

## Revendications

1. Procédé mis en œuvre par ordinateur (400) d'évaluation de formation, comprenant :
l'évaluation (410) de la conductivité, de la porosité totale de schiste, de la porosité effective et de la porosité totale sur la base de mesures d'outils de diagraphie correspondant au même volume de formation envahi ;
le calcul (420) d'une valeur de saturation totale en eau et une valeur de saturation effective en eau en utilisant la conductivité, la porosité totale de schiste, la porosité effective et la porosité totale de manière à avoir un même résultat de volume poreux non conducteur sur la base de la porosité totale et sur une porosité effective ; et **caractérisé par** :
l'ajustement (430) d'une valeur de densité d'argile sèche sur la base d'une différence entre la valeur de saturation totale en eau et la valeur de saturation effective en eau.

2. Procédé selon la revendication 1, comprenant en outre :
le calcul d'un ou plusieurs éléments parmi la saturation en eau liée à l'argile, la porosité de l'argile humide, la porosité effective, le volume d'hydrocarbures et la capacité d'échange de cations pour le volume de formation envahi.

3. Procédé selon la revendication 1, l'évaluation de la conductivité, de la porosité totale de schiste et de la porosité totale, le calcul de la valeur de saturation totale en eau et de la saturation effective en eau, et l'ajustement de la valeur de densité d'argile sèche étant effectués de manière répétée jusqu'à ce que la différence entre la valeur de saturation totale en eau et la valeur de saturation effective en eau diminue en dessous d'un seuil prédéterminé ou ne diminue plus.

4. Procédé selon la revendication 3, comprenant en outre :
le calcul du ou des éléments parmi la saturation en eau liée à l'argile, la porosité de l'argile humide, la porosité effective et l'échange cationique pour des volumes de formation autres que le volume de formation envahi à l'aide de la valeur ajustée de la densité de l'argile sèche et des mesures d'outils de diagraphie correspondant respectivement aux volumes de formation autres que le volume de formation envahi.

5. Procédé selon la revendication 3, comprenant en outre :
la réception des résultats d'analyse de carottage pour un échantillon associé à une profondeur de puits ; et
la comparaison des résultats d'analyse de carottage avec des valeurs correspondantes obtenues en utilisant la valeur ajustée de la densité de l'argile sèche et les mesures d'outils de diagraphie correspondant à la profondeur.

6. Procédé selon la revendication 1, l'évaluation comprenant l'obtention de valeurs d'un volume de sable, V_{sd}, d'un volume de schiste, Vₛₕ et d'une porosité effective, Φₑ₄, par inversion de matrice comme suit : $\left(\begin{matrix}{ρ}_{sd} & {ρ}_{sh} & {ρ}_{fl} \\ {Φ}_{nsd} & {Φ}_{nsh} & {Φ}_{nfl} \\ 1 & 1 & 1\end{matrix}\right) \left(\begin{matrix}{V}_{sd} \\ {V}_{sh} \\ {Φ}_{e 4}\end{matrix}\right) = \left(\begin{matrix}ρ \\ {Φ}_{n} \\ 1\end{matrix}\right)$ ρ_{sd} étant la densité du sable, ρₛₕ étant la densité du schiste, ρ_{fl} étant la densité du fluide, Φ_{nsd} étant la valeur du sable de porosité neutronique, Φₙₛₕ étant la valeur du schiste de porosité neutronique, Φ_{nfl} étant la valeur du fluide de porosité neutronique, p étant la valeur logarithmique de densité apparente et Φₙ étant la valeur logarithmique de porosité neutronique.

7. Procédé selon la revendication 6,
la densité du fluide étant calculée pour un mélange de filtrat de boue et de fluides originaux dans un volume de formation envahi *ρ_{fl}* = *ρ_{mf}S_{xoe_{DW}}* + *ρ_{hc}*(1 - *S_{xoe_{DW}}*) et la valeur du fluide de porosité neutronique étant *Φ_{nfl}* = *Φ_{nmf}S_{xoe_{DW}}* + *Φ_{nhc}*(1 - *S_{xoe_{DW}}*) ρ_{mf} représentant une densité de filtrat de boue, ρ_{hc} représentant une densité d'hydrocarbures, Φ_{nmf} représentant une valeur de filtrat de boue de porosité neutronique et Φ_{nhc} représentant une valeur d'hydrocarbure de porosité neutronique.

8. Procédé selon la revendication 6,
la valeur de porosité totale de schiste étant calculée comme suit ${Φ}_{tsh} = \left({ρ}_{dcl}-{ρ}_{sh}\right) / \left({ρ}_{dcl}-{ρ}_{fl}\right) ,$
une valeur initiale de la saturation effective en eau étant S_{xoe_DW}=1 et une valeur de densité d'argile sèche initiale, ρ_{dcl}, de 2,9 g/cc.

9. Procédé selon la revendication 1, comprenant en outre :
l'évaluation d'une capacité d'échange de cations, CEC, et/ou CEC par unité de volume, Qᵥ telle que : ${Q}_{v} = \frac{{S}_{wb} \left(\frac{{V}_{dcl}}{{V}_{sh}}\right)}{{Φ}_{t}}$ $CEC = \frac{100 \left({Q}_{v}-{Φ}_{t}\right)}{{ρ}_{dcl} {V}_{dcl}} .$

10. Appareil d'évaluation de formation (1000) comprenant :
une interface (1008) configurée pour recevoir des mesures d'outils de diagraphie ; et une unité de traitement de données (1002) connectée à l'interface et configurée :
pour évaluer la conductivité, la porosité totale de schiste, la porosité effective et la porosité totale en fonction des mesures d'outils de diagraphie correspondant au même volume de formation envahi ;
pour une valeur de saturation totale en eau et une valeur de saturation effective en eau utilisant un procédé à double eau, la conductivité, la porosité totale de schiste et la porosité totale de façon à avoir un même résultat de volume poreux non conducteur sur la base de la porosité totale et sur une porosité effective ; et
**caractérisé en ce que** l'unité de traitement de données (1002) est en outre configurée :
pour ajuster une valeur de densité d'argile sèche en fonction d'une différence entre la valeur de saturation totale en eau et la valeur de saturation effective en eau.

11. Appareil d'évaluation de formation selon la revendication 10, l'unité de traitement de données étant en outre configurée pour calculer un ou plusieurs éléments parmi la saturation en eau liée à l'argile, la porosité de l'argile humide, le volume d'hydrocarbures et la capacité d'échange de cations pour le volume de formation envahi.

12. Appareil d'évaluation de formation selon la revendication 10, l'unité de traitement de données évaluant la conductivité, la porosité totale de schiste et la porosité totale, déterminant la saturation totale en eau, calculant la saturation effective en eau et ajustant la valeur de densité d'argile sèche de manière répétée jusqu'à ce que la différence entre la valeur de saturation totale en eau et la valeur de saturation effective en eau diminue en dessous d'un seuil prédéterminé.

13. Appareil d'évaluation de formation selon la revendication 12, l'unité de traitement de données étant en outre configurée pour calculer le ou les éléments parmi la saturation en eau liée à l'argile, la porosité de l'argile humide, la porosité effective et l'échange cationique pour des volumes de formation autres que le volume de formation envahi en utilisant la valeur ajustée de la densité d'argile sèche et des mesures d'outils de diagraphie correspondant respectivement aux volumes de formation autres que le volume de formation envahi.

14. Appareil d'évaluation de formation selon la revendication 12, l'unité de traitement de données étant en outre configurée pour :
recevoir les résultats d'analyse de carottage pour un échantillon associé à une profondeur de puits ; et
comparer les résultats d'analyse de carottage avec des valeurs correspondantes obtenues en utilisant la valeur ajustée de la densité de l'argile sèche et les mesures d'outils de diagraphie correspondant à la profondeur.

15. Support d'enregistrement lisible par ordinateur (1004) stockant de manière non transitoire des codes exécutables qui, lorsqu'ils sont exécutés par un ordinateur (1000) amène l'ordinateur à effectuer un procédé (400) d'évaluation de la formation comprenant :
l'évaluation (410) de la conductivité, de la porosité totale de schiste, de la porosité effective et de la porosité totale sur la base de mesures d'outils de diagraphie correspondant au même volume de formation envahi ;
le calcul (420) d'une valeur de saturation totale en eau et d'une valeur de saturation effective en eau en utilisant la conductivité, la porosité totale de schiste, la porosité effective et la porosité totale de manière à avoir un même résultat de volume poreux non conducteur sur la base de la porosité totale et sur la base de la porosité effective ; et **caractérisé par** :
l'ajustement (430) d'une valeur de densité d'argile sèche sur la base d'une différence entre la valeur de saturation totale en eau et la valeur de saturation effective en eau.
